# EUROPEAN PATENT SPECIFICATION

(11) **EP 2 578 457 B1**
(45) Date of publication and mention of the grant of the patent: **11.05.2016**
(21) Application number: 11786412.4
(22) Date of filing: 29.03.2011
(51) Int. Cl.: B60R 25/02

(54) **STEERING LOCK DEVICE**
LENKSCHLOSSVORRICHTUNG
DISPOSITIF DE VERROUILLAGE DE DIRECTION

(30) Priority: 28.05.2010 JP 2010123034
(43) Date of publication of application: 10.04.2013
(73) Proprietor: Alpha Corporation, Yokohama-shi, Kanagawa 236-0004 (JP); Nissan Motor Co., Ltd, Yokohama-shi, Kanagawa 221-0023 (JP)
(72) Inventor: SUGIMOTO, Koichiro, Yokohama-shi, Kanagawa 236-0004 (JP); HAYASHI, Kenjirou, Kanagawa 243-0123 (JP)
(74) Representative: Grünecker Patent- und Rechtsanwälte PartG mbB
(86) International application number: PCT/JP2011/057791
(87) International publication number: WO 2011/148712

(56) References cited:
- DE-C1- 19 522 508
- JP-A- 2008 100 643
- JP-A- 2010 036 724
- JP-A- 2010 076 755
- US-A- 5 343 077

## Description

The present invention relates to a steering lock device that locks rotation of a steering shaft of an automobile.

A steering lock device includes a lock member that is slidably arranged between a locking position and an unlocking position. This steering lock device is formed such that the lock member is engaged with a steering shaft and thereby blocks rotary movement of the steering shaft at the locking position, and that the lock member is disengaged from the steering shaft and thereby allows free rotary movement of the steering shaft at the unlocking position.
DE19522508 (C1) refers to a steering lock according to the preamble of claim 1 comprising a locking member (2) spring loaded in an unlocking position. This spring tension is less than the biasing of the locking member in the locking position which is caused by the spring loading of the slider (3) through which the closing cylinder interacts with the locking member. The locking member (2) has two parallel tongues (23a) each with an inclined face. The slider has two corresponding inclined faces which interact with those of the locking member to move same into the locking position. The two tongues can have further inclined faces to interact with further inclined faces of the slider to move the locking member into the unlocked position.
US 5,343,077 refers to a steering lock device which can be used in an electric power supply control device for a vehicle and, in particular, in a lock actuator for a steering lock actuator of the handlebars of a motorcycle. Therein a sliding member is disclosed which interacts with the locking member, wherein both members are located in a perpendicular manner to each other.

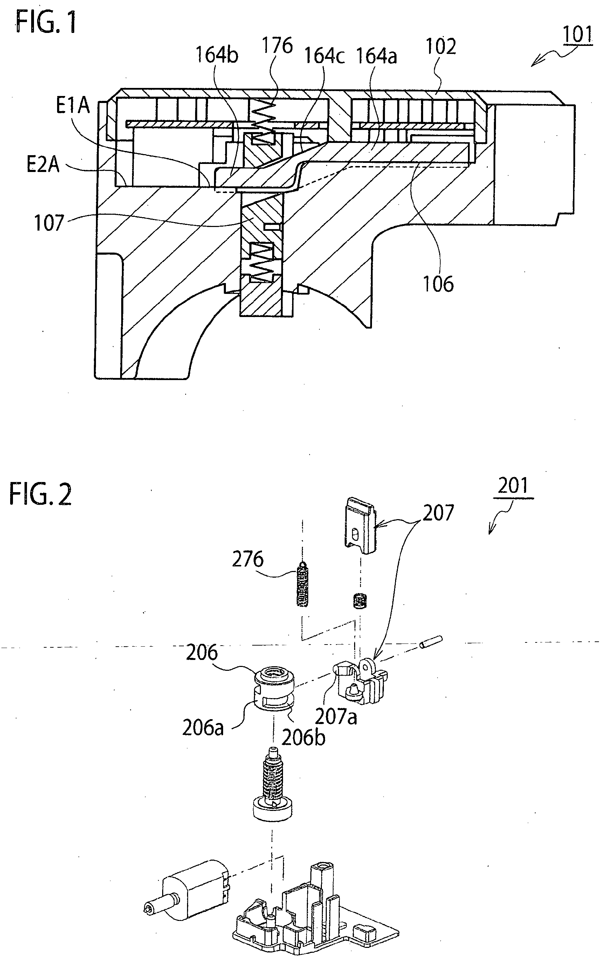

A steering lock device disclosed in Patent Literature 1 is cited as a device pertaining to the related art of this type. According to Patent Literature 1, as a configuration to cause a lock member to slide between a locking position and an unlocking position, this steering lock device 101 includes a sliding member 106 as shown in Fig. 1, which is slidable in a direction perpendicular to a sliding direction of a lock member 107. Meanwhile, the sliding member 106 has an inclined portion 164c which is linearly inclined along a sliding direction of the sliding member 106 and toward a steering shaft. In addition, the lock member 107 is held by being biased in a direction toward the steering shaft (in a locking direction) by a biasing spring 176.

Moreover, in the above-described configuration to move the lock member 107, when the sliding member 106 is caused to slide from a locking end E1A toward an unlocking end E2A against the biasing force of the biasing spring 176, the lock member 107 located at the locking position slides on a surface of the inclined portion 164c on a cover 102 side and moves to the unlocking position. The sliding member 106 continues the movement to the unlocking end E2A even after the lock member 107 has moved to the unlocking position, while the lock member 107 slides on a root portion 164a of the sliding member 106. Here, the root portion 164a extends in the sliding direction of the sliding member 106. Thus, the lock member 107 located at the unlocking position is held on a surface that is orthogonal to the sliding direction.

Meanwhile, when the sliding member 106 is caused to slide from the unlocking end E2A toward the locking end E1A, the lock member 107 located at the unlocking position slides on the surface of the inclined portion 164c on the cover 102 side by the biasing force of the biasing spring 176 and moves to the locking position. The sliding member 106 continues the movement to the locking end E1A even after the lock member 107 has moved to the locking position, while the lock member 107 slides on a tip portion 164b of the sliding member 106. Here, the tip portion 164b and the root portion 164a extend in the sliding direction of the sliding member 106. Thus, the lock member 107 located at any of the unlocking position and the locking position is held on the surface that is orthogonal to the sliding direction in the state against the biasing force of the biasing spring 176.

In the meantime, a steering lock device disclosed in Patent Literature 2 is cited as another device pertaining to the related art. According to Patent Literature 2, as a configuration to cause a lock member to slide between a locking position and an unlocking position, this steering lock device 201 includes a cylindrical cam member 206 and is rotatably and pivotally supported as shown in Fig. 2. Meanwhile, a helical cam groove 206b is formed on an outer cylindrical surface 206a of the cam member 206. In addition, a lock member 207 is held by being biased in a receding direction from a steering shaft (in an unlocking direction) by a biasing spring 276.

Moreover, in the above-described configuration to move the lock member 207, by rotating the cam member 206 in the locking direction with the biasing force of the biasing spring 276 applied, an engageably inserted portion 207a of the lock member 207 located at the locking position slides inside the cam groove 206b and moves to the unlocking position. The cam member 206 stops rotary movement at the point where the lock member 207 moves to the unlocking position.

Meanwhile, by rotating the cam member 206 in the unlocking direction against the biasing force of the biasing spring 276, the engageably inserted portion 207a of the lock member 207 located at the unlocking position slides inside the cam groove 206b and moves to the locking position. The cam member 206 stops rotary movement at the point where the lock member 207 moves to the locking position.

### CITATION LIST

### PATENT LITERATURE

Patent Literature 1: Japanese Patent Application Publication No. 2010-36724
Patent Literature 2: Japanese Patent Application Publication No. 2008-100643

### SUMMARY OF INVENTION

### TECHNICAL PROBLEM

In the meantime, the conventional steering lock device 101 described in Patent Literature 1 has a motor (not shown) placed as a drive source for allowing the sliding member 106 to slide between the locking end and the unlocking end. Moreover, a rotary force of the motor is transmitted to the sliding member 106 through gears (not shown). For this reason, if the mesh between the sliding member 106 and the gear is released or if the mesh between the gear and the motor is released for some reason such as application of an external force to the steering lock device 101 in the state where the lock member 107 is held at the unlocking position, the sliding member 106 is released from constraint and made slidable. When the sliding member 106 moves to the inclined portion 164c, the lock member 107 might slide on the inclined portion 164c and move to the locking position by the biasing force of the biasing spring 176. Similarly, if the sliding member 106 breaks down and falls off for some reason, the lock member 107 might move to the locking position by the biasing force of the biasing spring 176.

Meanwhile, Patent Literature 2 discloses a technique to arrange the biasing spring on the steering lock device described in Patent Literature 1 in such a manner as to apply the biasing force in the direction to disengage the lock member from the steering shaft. However, since the lock member 207 is held inside the helical cam groove 206b in the state where the lock member 207 is located at the locking position, the lock member 207 might unexpectedly move to the unlocking position when a force attributed to vibration or the like is applied to turn the cam member 206 in the unlocking direction.

In view of the above, an object of the present invention is to provide a steering lock device capable of preventing unexpected movement of a lock member from a locking position to an unlocking position or from the unlocking position to the locking position, which is attributed to a shock, vibration or the like applied from outside.
The above-mentioned object is solved according to the invention by means of a steering lock device comprising the features of claim 1. Advantageous embodiments can be derived from the subclaims.

### ADVANTAGEOUS EFFECTS OF INVENTION

According to the first aspect (claim 1) of the present invention, the lock member is held by being biased from the locking position side to the unlocking position side by the biasing force of the biasing member in the state where the lock member is held at the unlocking position. This makes it possible to prevent the lock member from sliding on the displacement portion of the sliding member and moving to the locking position.

In addition to the above-described effect, according to the second aspect (claim 2) of the present invention, in the state where the lock member is located at either the locking position or the unlocking position, the lock member is biased to and held at either the locking side extension portion or the unlocking side extension portion, which extend in the direction perpendicular to the sliding direction of the lock member, instead of being biased to and held at the inclined surface of the displacement portion. This makes it possible to prevent the lock member from unexpectedly moving from the locking position to the unlocking position upon application of a shock, vibration or the like from outside.

In addition to the above-described effects, according to the third aspect (claim 3) of the present invention, unlike the configuration to prevent displacement by using a projection, a recess, and the like, the lock member has to go across and travel on the entire displacement portion against the biasing force of the biasing means in order to move from the locking position to the unlocking position upon application of a force to the sliding member in the unlocking direction. This makes it possible to prevent the lock member from unexpectedly moving to the unlocking position.

Moreover, it is not necessary to provide a projection or a recess on a slidable contact surface of the sliding member where the lock member slides on. Accordingly, occurrence of rapping noises that may be caused at the time of passing through such a projection or a recess is avoided when the lock member slides on the slidable contact surface.

### BRIEF DESCRIPTION OF DRAWINGS

[Fig. 1] Fig. 1 is a cross-sectional view of principal part showing a locking state of a steering lock device of a conventional example.
[Fig. 2] Fig. 2 is an exploded perspective view showing a steering lock device of another conventional example.
[Fig. 3] Fig. 3 is an exploded perspective view of a steering lock device, which illustrates an embodiment of the present invention.
[Fig. 4] Fig. 4 is a plan view showing a locking state of the steering lock device, which illustrates the embodiment of the present invention.
[Fig. 5] Fig. 5 is a cross-sectional view taken along the line 5-5 in Fig. 4, which illustrates the embodiment of the present invention.
[Fig. 6] Fig. 6 is a cross-sectional view taken along the line 6-6 in Fig. 4, which illustrates the embodiment of the present invention.
[Fig. 7] Fig. 7 is a plan view showing the steering lock device in mid-course of a change from a locking state to an unlocking state, which illustrates the embodiment of the present invention.
[Fig. 8] Fig. 8 is a cross-sectional view taken along the line 8-8 in Fig. 7, which illustrates the embodiment of the present invention.
[Fig. 9] Fig. 9 is a cross-sectional view taken along the line 9-9 in Fig. 7, which illustrates the embodiment of the present invention.
[Fig. 10] Fig. 10 is a plan view showing the locking state of the steering lock device, which illustrates the embodiment of the present invention.
[Fig. 11] Fig. 11 is a cross-sectional view taken along the line 11-11 in Fig. 10, which illustrates the embodiment of the present invention.
[Fig. 12] Fig. 12 is a cross-sectional view taken along the line 12-12 in Fig. 10, which illustrates the embodiment of the present invention.

### DESCRIPTION OF EMBODIMENTS

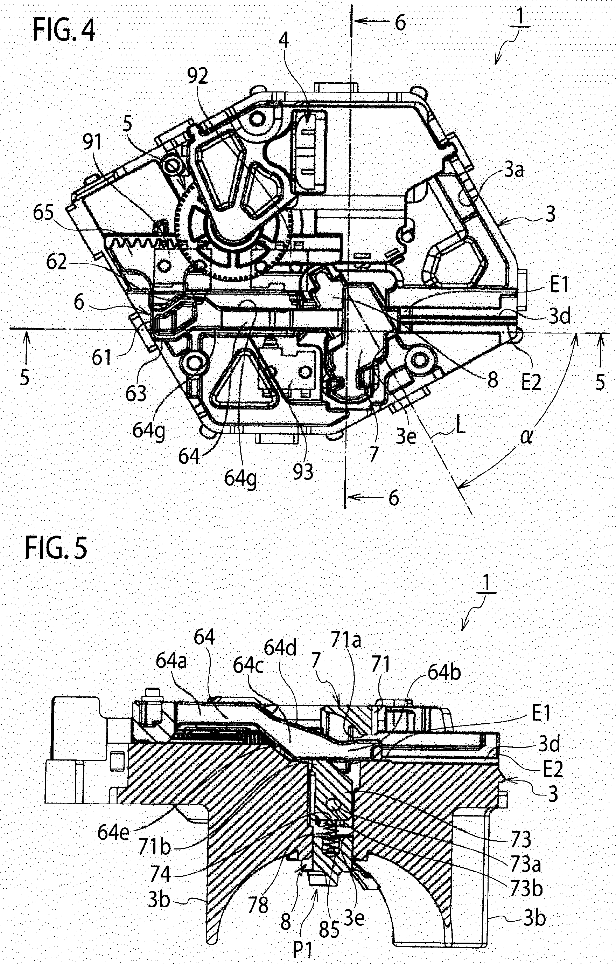

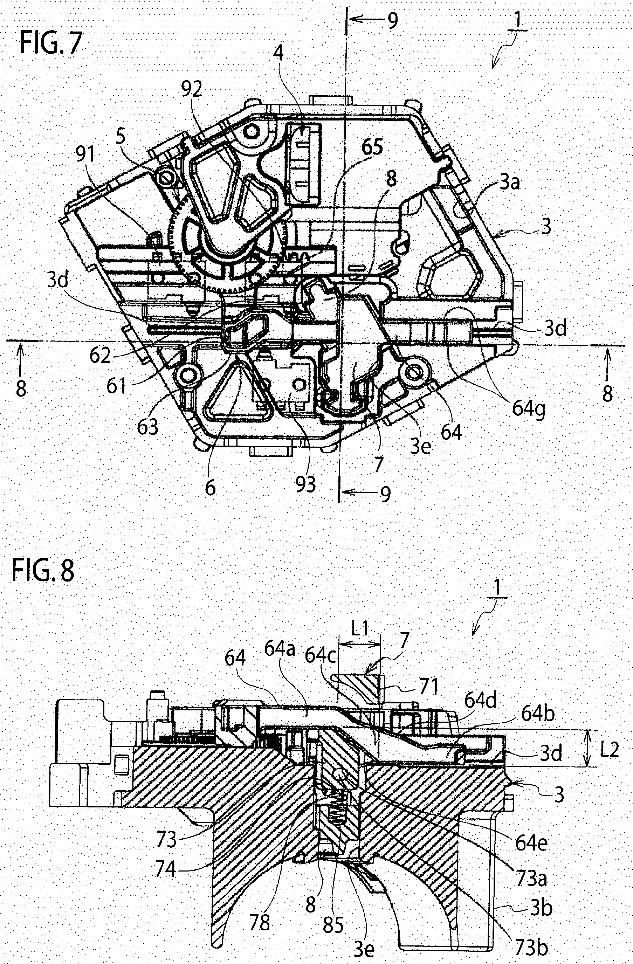

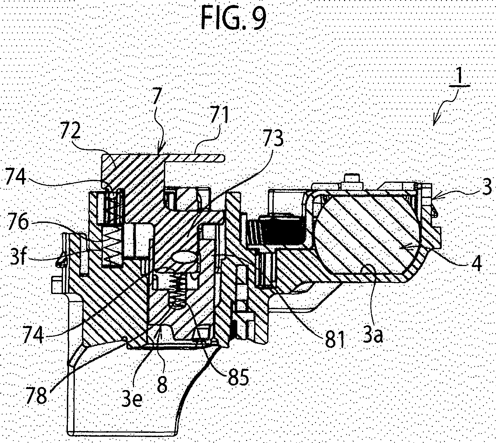

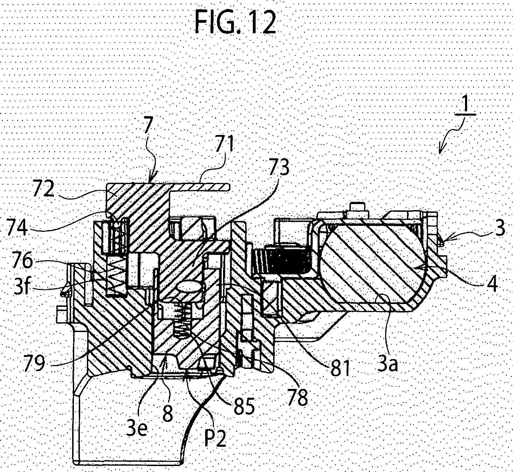

An embodiment of the present invention will be described below with reference to the drawings. Note that Fig. 4 to Fig. 12 illustrate the inside of a steering lock device in a state where a cover 2 and a circuit board 9 are removed for the convenience of explanation.

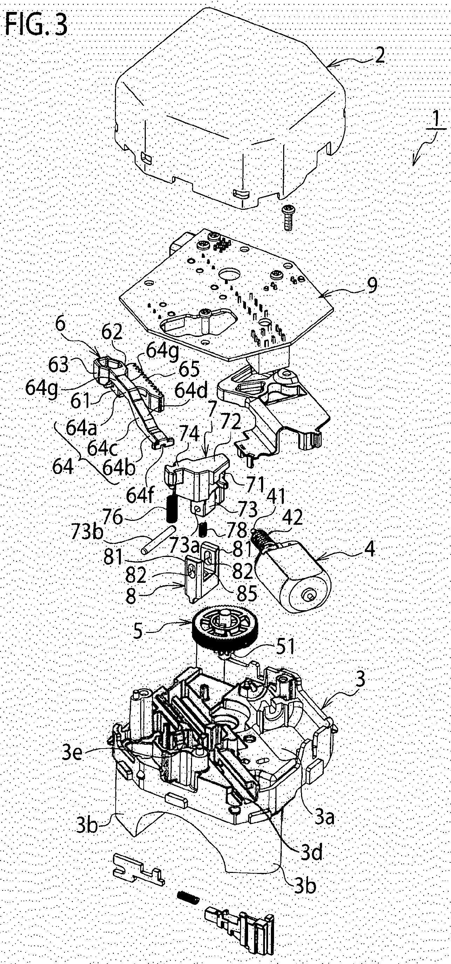

As shown in Fig. 3, a steering lock device 1 of this embodiment includes a cover 2 and a housing 3 to be assembled together and is attached to a steering column device A for housing an unillustrated steering shaft of an automobile.

The housing 3 includes a pair of legs 3b, 3b located in such a manner as to stride over the steering column device. Moreover, a component housing chamber 3a is provided thereinside which is open to one side (an upper side in Fig. 4 and the like) and configured to define a housing space by being covered with the cover 2. The component housing chamber 3a houses a motor 4 which is a drive source, a worm wheel 5 configured to rotate in an unlocking direction and a locking direction by the drive of this motor 4, a sliding member 6 configured to be driven through this worm wheel 5 and to slide in a direction perpendicular to a lock body 8 to be described later, a hanger member 7 constituting a lock member and being engaged with the sliding member 6, the lock body 8 constituting the lock member, being coupled with the hanger member 7, and having a tip capable of moving in and out of a bottom surface of the housing 3 and thereby being fitted into the steering shaft, and a printed board 9 located above these components.

A rail-like guide portion 3d configured to guide a groove portion 64f of the sliding member 6 is formed at a bottom portion of the component housing chamber 3a. This guide portion 3d is located on a plane parallel to an axial direction of the steering shaft and is inclined at a predetermined angle α with respect to a straight line L that is parallel to the axial direction. Here, the sliding member 6 is slidable between a locking end E1 and an unlocking end E2 of the guide portion 3d.

In addition, the housing 3 includes a through-hole 3e which extends in a direction perpendicular to the axial direction of the steering shaft and penetrates from a bottom portion of the component housing chamber 3a to a space between the pair of the legs 3b, 3b. The lock member formed of the lock body 8 and the hanger member 7 is inserted into this through-hole 3e.

A worm gear 42 configured to mesh with the worm wheel 5 is fixed to a rotating shaft 41 of the motor 4. The worm wheel 5 is provided with a drive gear 51 that rotates integrally with the worm wheel 5.

As shown in Fig. 3, Fig. 5, and the like, the sliding member 6 includes a base portion 61, cam portions 62, 63 provided on one end of the base portion 61, an arm portion 64 protruding from the end of the base portion 61 along the sliding direction of the sliding member 6, and a rack portion 65 provided on another end of the base portion 61 in such a manner as to extend in the sliding direction and configured to mesh with the drive gear 51. The arm portion 64 is integrally formed of a root portion (an unlocking side extension portion) 64a extending from the end of the base portion 61 in the sliding direction of the sliding member 6, a tip portion (a locking side extension portion) 64b located on a tip side of the arm portion 64 and extending in the sliding direction of the sliding member 6, and a displacement portion (a sliding member side displacement portion) 64c interposed between the root portion 64a and the tip portion 64b and being gradually inclined toward the steering shaft as extending from the root portion 64a to the tip portion 64b. Meanwhile, a groove portion 64f is formed in a longitudinal direction of the tip portion 64b (the sliding direction of the sliding member 6) on a surface of the tip portion 64b on the housing 3 side (a surface on a lower side in Fig. 5) in such a manner as to stride over the guide portion 3d.

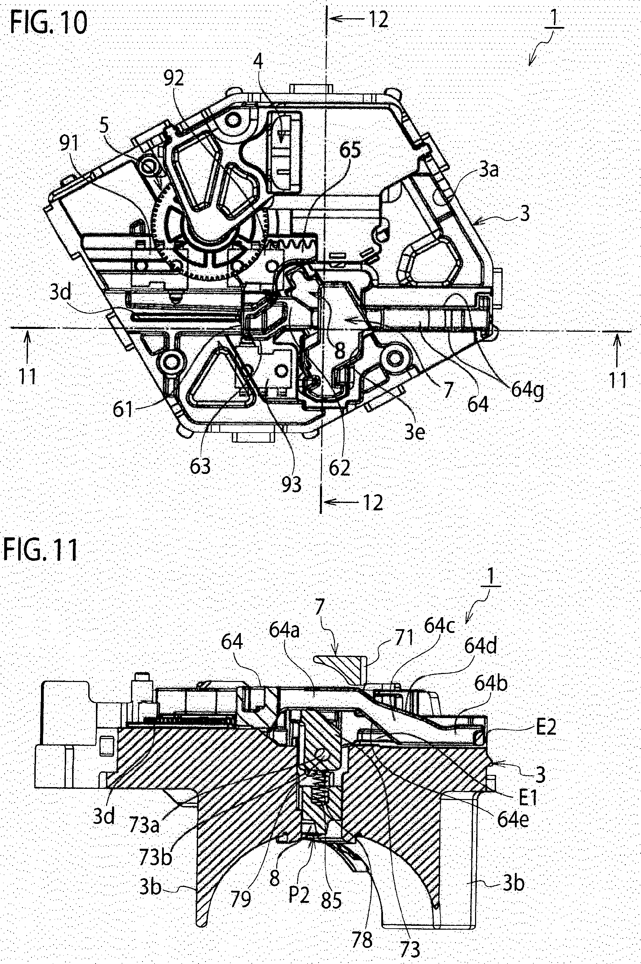

Here, a surface of the arm portion 64 on the housing 3 side (an inner surface formed by the displacement portion 64c and the tip portion (the locking side extension portion) 64b) is set to a slidable contact surface 64e with the hanger member 7 while a surface of the arm portion 64 on the cover 2 side is set to a forcible displacement surface 64d. Then, as the sliding member 6 slides, the lock body 8 slides on the slidable contact surface 64e of the displacement portion 64c and thereby advances or retreats relative to the steering shaft. As a consequence of this movement, the lock body 8 is displaced between a locking position P1 (Fig. 5) to block rotation of the steering shaft and an unlocking position P2 (Fig. 11) to permit rotation of the steering shaft.

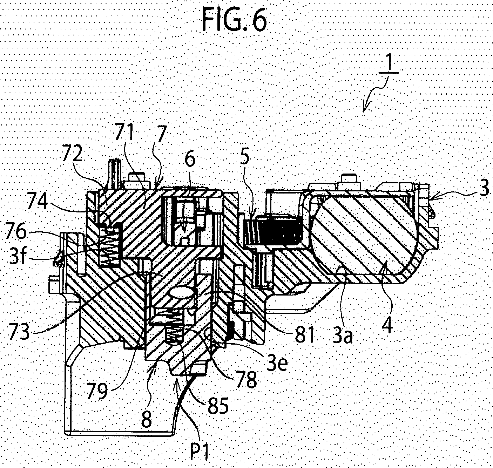

As shown in Fig. 6 and the like, the hanger member 7 includes a base portion 72 having a substantially U-shaped cross section and being provided with an insertion portion 71 where the sliding member 6 is inserted into the U-shape, and a coupling portion 73 protruding from a lower end of this base portion 72 and being coupled with the lock body 8. The base portion 72 is arranged in such a manner that a width direction thereof is perpendicular to the guide portion 3d. Meanwhile, the coupling portion 73 is arranged in such a manner that a width direction thereof is parallel to the axial direction of the steering shaft.

A dimension in the width direction of the insertion portion 71 of the base portion 72 is set slightly greater than a width dimension of the arm portion 64 of the sliding member 6. On two edge portions in a height direction of the insertion portion 71, a lock member side forcible displacement portion 71a (a forcible displacement portion on the lock member side) and a lock member side displacement portion 71b (a displacement portion on the lock member side) are respectively formed and inclined at an angle similar to that of the displacement portion 64c of the sliding member 6. Here, the lock member side forcible displacement portion 71a is formed on an edge of the insertion portion 71 on the cover 2 side (an upper side surface in Fig. 5) and the lock member side displacement portion 71b is formed on an edge of the insertion portion 71 on the component housing chamber 3 side (a lower side surface in Fig. 5), respectively.

In addition, a hanger side spring seat 74 is formed in a protruding manner at the base portion 72. A displacement spring (a biasing member) 76 formed of a coil spring is compressed and held between the hanger side spring seat 74 and a housing side spring seat 3f formed at the component housing chamber 3a. A compression reaction force of the displacement spring 76 biases the hanger member 7 toward the cover 2 (from the locking position P1 toward the unlocking position P2 of the lock member).

The coupling portion 73 is formed of an insertion hole 73a penetrated in the width direction and a coupling pin 73b to be inserted into the insertion hole 73a. The coupling pin 73b is inserted into a coupling hole 82 formed in the arm portion 64 of the lock body 8 to be described later and is fitted into the insertion hole 73a. Thus, the lock member is formed by coupling the hanger member 7 with the lock body 8.

As shown in Fig. 3, a pair of arm portions 81 are provided on one end of the lock body 8 in such a manner as to protrude toward the hanger member 7 (upward in Fig. 3). A coupling hole 82 in a shape of an elongated hole that allows insertion of the coupling pin 73b is formed on each of the arm portions 81. Meanwhile, a locking side spring seat hole 85 is formed between the arm portions 81.

While the hanger member 7 is coupled with the lock body 8 using the coupling pin 73b, a shaft trace spring 78 formed of a coil spring is compressed and held between the locking side spring seat hole 85 and a hunger side trace spring seat 79 formed on an end surface of the coupling portion 73 of the hanger member 7, the surface being on the lock body 8 side. Then, a compression reaction force of the shaft trace spring 78 biases and retains the lock body 8 toward the steering shaft (from the unlocking position side to the locking position side of the lock member).

On the printed board 9, detection switches (detecting means) 91 to 93 to be activated in response to a sliding operation of the sliding member 6 are arranged along side surfaces 64g of the sliding member 6. As shown in Fig. 4, the first detection switch 91 out of these switches is activated in engagement with the first cam portion 62 of the sliding member 6, thereby detecting that the lock body 8 is at the locking position P1. Meanwhile, as shown in Fig. 10, the second detection switch 92 is activated in engagement with the first cam portion 62 of the sliding member 6 and the third detection switch 93 is activated in engagement with the second cam portion 63 of the sliding member 6, thereby detecting that the lock body 8 is at the unlocking position P2. Note that these detection switches 91 to 93 may be of any of a contact (mechanical) type and a noncontact type (such as hole sensors). In addition, the number of the detection switches is defined on the basis of required safety specifications and so forth. The sliding member 6 is guided by the groove portion 64f formed in such a manner as to stride over the guide member 3d. Accordingly, the detection switches 91 to 93 can be arranged along the two side surfaces 64g of the sliding member 6.

Next, procedures for assembling the above steering lock device 1 will be described. First, the lock member is assembled by coupling the coupling portion 73 of the hanger member 7 with the arm portion 81 of the lock body 8 by using the coupling pin 73b. Next, the arm portion 64 of the sliding member 6 is inserted into the insertion portion 71 of the hanger member 7. An assembled body obtained by assembling the sliding ember 6, the hanger member 7, and the lock body 8 together is housed in the component housing chamber 3a of the housing 3. In addition, the lock body 8 and the coupling portion 73 of the hanger member 7 are inserted into the through-hole 3e of the housing 3. Then, the base portion 61 of the sliding member 6 is placed on the guide portion 3d of the component housing chamber 3a.

Subsequently, the worm wheel 5 is placed at a predetermined position inside the component housing chamber 3a of the housing 3 and the drive gear 51 is brought into mesh with the rack portion 65 of the sliding member 6. Then, the motor 4 is disposed in the vicinity of the worm wheel 5 and the worm gear 42 on the rotating shaft 41 is brought into mesh with the worm wheel 5. Further, the printed board 9 is placed on an upper part in the component housing chamber 3a and wires are connected. After the printed board 9 is fixed inside the component housing chamber 3a with screws, the component housing chamber 3a is covered by attaching the cover 2 to the housing 3.

After the steering lock device 1 is assembled as described above, the steering lock device 1 is attached to the steering column device while allowing the pair of leg portions 3b, 3b to stride over the steering column device.

Next, operations of the above steering lock device 1 will be described. In a locking state where the lock body 8 shown in Fig. 4 to Fig. 6 is located at the locking position P1, the sliding member 6 is located on the locking end E1 side of the guide member 3d and the tip portion 64b of the sliding member 6 is engaged with the insertion portion 71 of the hanger member 7. For this reason, the lock body 8 to be coupled with the hanger member 7 is located at the locking position P1 and the lock body 8 protrudes from the bottom surface of the housing 3 and gets fitted into the steering shaft. As a consequence, rotation of the steering shaft is blocked and the automobile is thereby maintained in an unsteerable condition.

In the meantime, when the motor 4 starts rotation in an unlocking direction due to an unlock instruction, the rack portion 65 is driven by the drive gear 51 through the rotating shaft 41, the worm gear 42 and the worm wheel 5. Then, the sliding member 6 starts the movement in the direction from the locking end E1 side to the unlocking end E2 side along the guide portion 3d of the housing 3. Accordingly, the hanger member 7 receives the biasing force from the displacement spring 76, whereby the lock member side displacement portion 71b moves on the slidable contact surface 64e of the sliding member 6 while biasing and coming into contact with the tip portion 64b, the displacement portion 64c, and the root portion 64a in this order. In conjunction with this movement, the lock body 8 is displaced in a receding direction from the steering shaft. Here, the slidable contact surface 64e is set to the surface of the arm portion 64 on the housing 3 side (the inner surface formed by the displacement portion 64c and the tip portion (the locking side extension portion) 64b).

Thereafter, the lock body 8 shown in Fig. 10 to Fig. 12 is located at the unlocking position P2 and establishes an unlocking state upon completion of the movement of the sliding member 6 to the unlocking end E2. In other words, the lock body 8 is set back inside the housing 3 and is displaced to the unlocking position P2. Hence, rotation of the steering shaft is permitted, whereby the automobile transitions to a steerable condition. At this time, upon completion of the movement of the sliding member 6 to the unlocking end E2 of the guide portion 3d, the second detection switch 92 is engaged with the first cam portion 62 of the sliding member 6 and is thereby activated. At the same time, the third detection switch 93 is engaged with the second cam portion 63 of the sliding member 6 and is thereby activated. Thus, the switches electrically detect the fact that the lock body 8 is located at the unlocking position P2 and the vehicle transitions to a standby condition where an engine is ready to start any time.

Here, there may be a case where the lock body 8 is unable to move to the unlocking position with the assistance of the biasing force of the displacement spring 76 due to being dragged by the steering shaft, for example. In such a case, the lock member side forcible displacement portion 71a is caused to slide on the forcible displacement surface 64d defined on the arm portion 64 when the sliding member 6 moves from the locking end E1 to the unlocking end E2, thereby forcibly pushing up the hanger member 7 and housing the lock body 8 into the housing 3.

Subsequently, upon return to the locking state again in accordance with a lock instruction, the sliding member 6 starts movement from the unlocking end E2 to the locking end E1 when the worm wheel 5 is driven by the motor 4 so as to rotate in the locking direction. Thus, the lock member side displacement portion 71b tracks the root portion 64a, the displacement portion 64c, and the tip portion 64b in this order against the biasing force of the displacement spring 76 and the lock body 8 is displaced to the locking position P1. Accordingly, the hanger member 7 moves along the displacement portion 64c while the lock member side displacement portion 71b of the hanger member 7 is in the state of contact and engagement with the slidable contact surface 64e of the sliding member 6. Hence, the lock body 8 is displaced toward the steering shaft in conjunction with this movement. As a consequence, the lock body 8 protrudes from the housing 3 and the tip of the lock body 8 is fitted into the steering shaft to block rotation of the steering shaft. Eventually, the automobile transitions to the unsteerable condition.

At this time, the first detection switch 91 is engaged with the first cam portion 62 of the sliding member 6 and is thereby activated upon completion of the movement of the sliding member 6 to the locking end E1 of the guide portion 3d. Thus, the switch electrically detects the fact that the lock body 8 is located at the locking position P1 and the vehicle transitions to a condition where the engine cannot be started.

Here, if the tip of the lock body 8 is opposed not to one of engagement grooves of the steering shaft but instead to an outer peripheral portion between the engagement grooves, the shaft trace spring 78 is compressed while the tip of the lock body 8 is in the state of contact with the outer peripheral portion of the steering shaft. Thereafter, upon rotation of the steering shaft, the shaft trace spring 78 is expanded and the lock body 8 is fitted into one of the engagement grooves of the steering shaft, and rotation of the steering shaft is thereby blocked.

As described above, according to the present invention, the lock member is held by being biased from the locking position P1 side to the unlocking position P2 side by the biasing force of the displacement spring 76 in the state where the lock member is held in the unlocking position P2. This makes it possible to prevent the lock member from sliding on the displacement portion 64c of the sliding member 6 and moving to the locking position P1.

When the lock member is located at either the locking position P1 or the unlocking position P2, the lock member is not biased to or held at the inclined surface of the displacement portion 64c, but is biased to and held at either the root portion 64a or the tip portion 64b extending in the direction perpendicular to the sliding direction of the lock member. For this reason, in case of application of a shock, vibration or the like from outside, it is possible to prevent the lock member from unexpectedly moving from the locking position P1 to the unlocking position P2.

In order to move the lock member from the locking position P1 to the unlocking position P2, the sliding member 6 has to be moved in a distance L1 in the sliding direction of the sliding member 6 and in a distance L2 in the sliding direction of the lock member 8 while withstanding the biasing force of the displacement spring 76. For this reason, it is highly unlikely that vibration or a shock can move the lock member in the unlocking direction. Thus, it is possible to prevent the lock member from unexpectedly moving to the unlocking position P2.

In addition, since no projections or recesses have to be provided on the slidable contact surface 64e of the sliding member 6 where the lock member slides on, rapping noises that used to occur at the time of passage through projections or recesses are eliminated when the lock member slides on the slidable contact surface 64e.

In this embodiment, the lock body 8 moves in conjunction with the movement of the sliding member 6, gets fitted into the steering shaft, and blocks rotation of the steering shaft. In addition, if the lock body 8 gets stuck in the course of the movement, the lock body 8 is forcibly moved by the sliding member 6. Thus, it is possible to move the lock body 8 reliably.

This embodiment is configured to detect the displaced position of the sliding member 6 with the detection switches 91 to 93 instead of detecting a displaced position of the lock body 8. Accordingly, it is possible to activate the detection switches 91 to 93 and to stop the motor 4 after completion of the movement of the lock body 8 and in the subsequent state where the hanger member 7 is biased to and held at the root portion 64a or the tip portion 64b of the sliding member 6. For this reason, when the lock member is located at either the locking position P1 or the unlocking position P2, the lock member is not biased to or held at the inclined surface of the displacement portion 64c, but is biased to and held at either the root portion 64a or the tip portion 64b extending in the direction perpendicular to the sliding direction of the lock member.

The lock body 8 located at the unlocking position is detected by using the two detection switches 92, 93. Accordingly, it is possible to determine whether or not the lock body 8 is located in the unlocking position even if any one of the detection switches 92, 93 breaks down. Thus, a driver can be prevented from facing a situation to start driving a vehicle in the state of locked steering, which is attributed to the lock body 8 being dragged by a steering shaft and failing to fully move to the unlocking position.

### INDUSTRIAL APPLICABILITY

According to the steering lock device of the present invention, the lock member is held by being biased from the locking position side to the unlocking position side by the biasing force of the biasing member in the state where the lock member is held at the unlocking position. Thus, the lock member can be prevented from sliding on the displacement portion of the sliding member and moving to the locking position.

## Claims

1. A steering lock device (1) comprising:
a lock member (7, 8) that is slidable between a locking position (P1) and an unlocking position (P2) and biased from the locking position to the unlocking position by a biasing member (76),
the locking position (P1) being a position where the lock member (7, 8) is engaged with a steering shaft and blocks rotation of the steering shaft, the unlocking position (P2) being a position where the lock member (7, 8) is away from the steering shaft and allows the rotation of the steering shaft; and
a sliding member (6) arranged slidably in a direction perpendicular to a sliding direction of the lock member (7, 8),
wherein at least any one of the lock member (7, 8) and the sliding member (6) includes a displacement portion (64c, 71 a) inclined along the sliding direction of the sliding member (6) and toward the steering shaft, and
the lock member (7, 8) is displaced between the locking position (P1) and the unlocking position (P2) in conformity to inclination of the displacement portion (64c, 71 a) in conjunction with slide of the sliding member (6), **characterized in that** the lock member is formed by coupling a hanger member (7) with a lock body (8);
a compression reaction force of the biasing member (76) biases the hanger member (7) from the locking position (P1) toward the unlocking position (P2) of the lock member (7, 8);
a coil spring (78) is compressed and held between the lock body (8) and the hanger member (7), such that a compression reaction force of the coil spring (78) biases and retains the lock body (8) toward the steering shaft from the unlocking position side to the locking position side of the lock member.

2. The steering lock device (1) according to claim 1, wherein the sliding member (6) comprises:
the displacement portion (64c);
a locking side extension portion (64b) provided at a locking side end portion of the displacement portion (64c) in such a manner as to extend in the sliding direction of the sliding member; and
an unlocking side extension portion (64a) provided at an unlocking side end portion of the displacement portion (64c) in such a manner as to extend in the sliding direction of the sliding member (6),
wherein the lock member (7, 8) is biased to and held at the locking side extension portion (64b) by the biasing member in a state where the lock member (7, 8) is located at the locking position (P1), and
the lock member (7, 8) is biased to and held at the unlocking side extension portion (64a) by the biasing member in a state where the lock member (7, 8) is located at the unlocking position (P2).

3. The steering lock device (1) according to claim 2, wherein the lock member (7, 8) is brought into contact with and held at an inner surface by the biasing member (76), the inner surface being formed by the displacement portion (64c) and the locking side extension portion (64b).

## Patentansprüche

1. Lenkschlossvorrichtung (1), die umfasst:
ein Verriegelungselement (7, 8), das zwischen einer Verriegelungs-Position (P1) und einer Entriegelungs-Position (P2) verschoben werden kann und durch ein Spannelement (76) von der Verriegelungs-Position an die Entriegelungs-Position gespannt wird,
wobei die Verriegelungs-Position (P1) eine Position ist, in der das Verriegelungselement (7, 8) mit einer Lenkwelle in Eingriff ist und Drehung der Lenkwelle verhindert, und die Entriegelungs-Position (P2) eine Position ist, in der das Verriegelungselement (7, 8) von der Lenkwelle entfernt ist und Drehung der Lenkwelle zulässt; sowie ein Gleitelement (6), das in einer Richtung senkrecht zu einer Gleitrichtung des Verriegelungselementes (7, 8) verschiebbar angeordnet ist,
wobei das Verriegelungselement (7, 8) oder/und das Gleitelement (6) einen Verschiebungsabschnitt (64c, 71 a) enthält/enthalten, der in der Gleitrichtung des Gleitelementes (6) und zu der Lenkwelle hin geneigt ist, und
das Verriegelungselement (7, 8) entsprechend der Neigung des Verschiebungsabschnitts (64c, 71 a) beim Gleiten des Gleitelementes (6) zwischen der Verriegelungs-Position (P1) und der Entriegelungs-Position (P2) verschoben wird, **dadurch gekennzeichnet, dass** das Verriegelungselement ausgebildet wird, indem ein Aufhängungselement (7) mit einem Verriegelungskörper (8) gekoppelt wird;
eine Druck-Gegenkraft des Spannelementes (76) das Aufhängungselement (7) von der Verriegelungs-Position (P1) auf die Entriegelungs-Position (P2) des Verriegelungselementes (7, 8) zu spannt;
eine Schraubenfeder (78) zwischen dem Verriegelungskörper (8) und dem Aufhängungselement (7) zusammengedrückt und gehalten wird, so dass eine Druck-Gegenkraft der Schraubenfeder (78) den Verriegelungskörper (8) von der Seite der Entriegelungs-Position zu der Seite der Verriegelungs-Position des Verriegelungselementes auf die Lenkwelle zu drückt und hält.

2. Lenkschlossvorrichtung (1) nach Anspruch 1, wobei das Gleitelement (6) umfasst:
einen Verschiebungsabschnitt (64c);
einen Verriegelungsseiten-Vorsprungsabschnitt (64b), der an einem Verriegelungsseiten-Endabschnitt des Verschiebungsabschnitts (64c) so angeordnet ist, dass er in der Gleitrichtung des Gleitelementes vorsteht; und
einen Entriegelungsseiten-Vorsprungsabschnitt (64a), der an einem Entriegelungsseiten-Endabschnitt des Verschiebungsabschnitts (64c) so angeordnet ist, dass er in der Gleitrichtung des Gleitelementes (6) vorsteht,
wobei das Verriegelungselement (7, 8) durch das Spannelement in einem Zustand, in dem sich das Verriegelungselement (7, 8) an der Verriegelungs-Position (P1) befindet, zu dem Verriegelungsseiten-Vorsprungsabschnitt (64b) gespannt und an ihm gehalten wird, und
das Verriegelungselement (7, 8) durch das Spannelement in einem Zustand, in dem sich das Verriegelungselement (7, 8) an der Entriegelungs-Position (P2) befindet, zu dem Entriegelungsseiten-Vorsprungsabschnitt (64a) gedrückt und an ihm gehalten wird.

3. Lenkschlossvorrichtung (1) nach Anspruch 2, wobei das Verriegelungselement (7, 8) durch das Spannelement (76) in Kontakt mit einer Innenfläche gebracht und an ihr gehalten wird, und diese Innenfläche durch den Verschiebungsabschnitt (64c) und den Verriegelungsseiten-Vorsprungsabschnitt (64b) gebildet wird.

## Revendications

1. Dispositif de verrouillage de direction (1) comprenant :
un élément de verrouillage (7, 8) que l'on peut faire coulisser entre une position de verrouillage (P1) et une position de déverrouillage (P2) et sollicité de la position de verrouillage à la position de déverrouillage par un élément de sollicitation (76),
la position de verrouillage (P1) étant une position dans laquelle l'élément de verrouillage (7, 8) est en prise avec l'arbre de direction et bloque la rotation de l'arbre de direction, la position de déverrouillage (P2) étant une position dans laquelle l'élément de verrouillage (7, 8) est à l'écart de l'arbre de direction et permet la rotation de l'arbre de direction ; et
un élément coulissant (6) agencé de manière coulissante dans une direction perpendiculaire à la direction de coulissement de l'élément de verrouillage (7, 8),
dans lequel, au moins un quelconque de l'élément de verrouillage (7, 8) et de l'élément coulissant (6) comporte une partie de déplacement (64c, 71a) inclinée dans la direction de coulissement de l'élément coulissant (6) et vers l'arbre de direction, et
l'élément de verrouillage (7, 8) est déplacé entre la position de verrouillage (P1) et la position de déverrouillage (P2) en conformité avec l'inclinaison de la partie de déplacement (64c, 71a) conjointement avec le coulissement de l'élément coulissant (6), **caractérisé en ce que**
l'élément de verrouillage est formé par couplage d'un élément de suspension (7) avec un corps de verrouillage (8) ;
une force de réaction de compression de l'élément de sollicitation (76) sollicite l'élément de suspension (7) de la position de verrouillage (P1) vers la position de déverrouillage (P2) de l'élément de verrouillage (7, 8) ;
un ressort hélicoïdal (78) est comprimé et maintenu entre le corps de verrouillage (8) et l'élément de suspension (7) de sorte qu'une force de réaction de compression du ressort hélicoïdal (78) sollicite et maintient le corps de verrouillage (8) vers l'arbre de direction depuis le côté de la position de déverrouillage vers le côté de la position de verrouillage de l'élément de verrouillage.

2. Dispositif de verrouillage de direction (1) selon la revendication 1, dans lequel l'élément coulissant (6) comprend :
la partie de déplacement (64c) ;
une partie d'extension côté verrouillage (64b) prévue au niveau de la partie d'extrémité côté verrouillage de la partie de déplacement (64c) de telle manière à s'étendre dans la direction de coulissement de l'élément coulissant ; et
une partie d'extension côté déverrouillage (64a) prévue au niveau de la partie d'extrémité côté déverrouillage de la partie de déplacement (64c) de telle manière à s'étendre dans la direction de coulissement de l'élément coulissant (6),
dans lequel l'élément de verrouillage (7, 8) est sollicité vers et est maintenu au niveau de la partie d'extension côté verrouillage (64b) par l'élément de sollicitation dans un état dans lequel l'élément de verrouillage (7, 8) est situé dans la position de verrouillage (P1), et
l'élément de verrouillage (7, 8) est sollicité vers et est maintenu au niveau de la partie d'extension côté déverrouillage (64a) par l'élément de sollicitation dans un état dans lequel l'élément de verrouillage (7, 8) est situé dans la position de déverrouillage (P2).

3. Dispositif de verrouillage de direction (1) selon la revendication 2, dans lequel l'élément de verrouillage (7, 8) est amené en contact avec et est maintenu au niveau d'une surface interne par l'élément de sollicitation (76), la surface interne étant formée par la partie de déplacement (64c) et la partie d'extension côté verrouillage (64b).
